# EUROPEAN PATENT APPLICATION

(11) **EP 1 563 773 A1**
(43) Date of publication of application: **17.08.2005**
(21) Application number: 05250844.7
(22) Date of filing: 15.02.2005
(51) Int. Cl.: A47J 27/21

(54) **Water boiling appliances**

(30) Priority: 16.02.2004 GB 0403384
(71) Applicant: STRIX LIMITED, Ronaldsway, Isle of Man IM9 2RG (GB)
(72) Inventor: Fumagalli, Richard Brandon, Chester Cheshire CH3 5EB (GB); Scott, Michael James, Isle of Man IM9 5PH (GB)
(74) Representative: Samuels, Adrian James

(57) **Abstract**

A liquid boiling appliance 2 comprises a steam sensitive switch 16 mounted at an upper part of the appliance. An actuator 20 cooperates with a surface or object 6 on which the appliance 2 is placed and a linkage 26 extends between the actuator 20 and the switch 16 such that, in use, when the appliance 2 is lifted from the surface or object 6 with the switch 16 closed, the actuator 20 moves out of cooperation with the surface or object 6, this movement of the actuator 20 being transmitted by the linkage 26 to the switch 16 to open the switch 16.

## Description

The present invention relates to water boiling appliances such as kettles and hot water jugs.

Such appliances normally include a steam sensitive switch which turns off the appliance when water in the appliance boils and also an overheat protection control which operates in the event that the appliance boils dry or is switched on without any water in it.

Typically the steam sensitive switch is mounted at the top of the vessel handle so that it can be operated from that position by a user.

With the advent of cordless appliances in which an appliance proper is placed on a power supply base, it is desirable to switch the appliance off when it is lifted from its power base so that when the appliance is replaced upon its base after hot water has been poured, power is not once again supplied to the heater of the appliance, thereby potentially causing it to overheat.

The present invention seeks to overcome this problem so, the first aspect provides a liquid boiling appliance comprising: a steam sensitive switch mounted at an upper part of the appliance; an actuator cooperable with a surface or object on which the appliance is placed; and a linkage extending between the actuator and the steam sensitive switch such that, in use, when the appliance is lifted from the surface or object with the steam switch closed, the actuator moves out of cooperation with the surface or object, this movement of the actuator being transmitted by the linkage to the switch to open the switch.

Preferably the appliance is a cordless appliance and the actuator is arranged to cooperate with a portion of the power base for the appliance. However, the invention equally applies to corded appliances.

Preferably, the actuator projects from the appliance.

Preferably the actuator is spring biased.

Preferably the steam sensitive switch comprises an over centre switch mechanism, such that the linkage need only move the mechanism over centre to switch off the switch.

Preferably the linkage extends adjacent the rear wall of the water containing chamber of the appliance.

Most preferably the linkage is provided with means which limits the movement of the linkage and prevents excessive forces being applied to the steam sensitive switch.

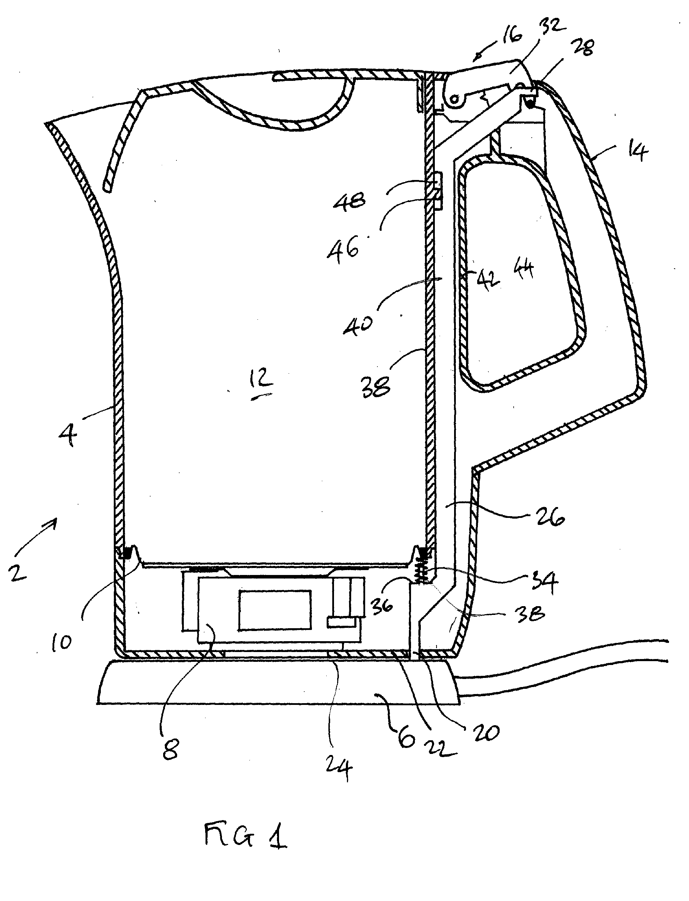

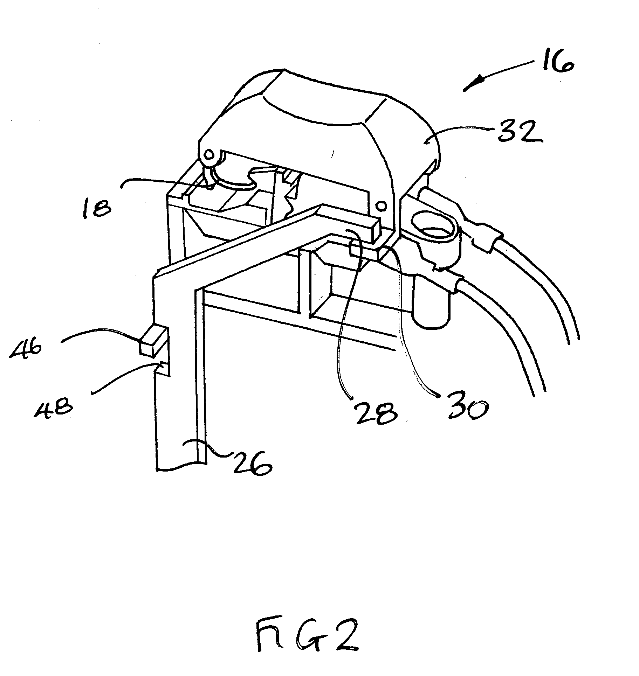

A preferred embodiment of the invention will now be described with reference to Figures 1 and 2 in which:
Figure 1 shows a cordless electric kettle embodying the invention; and
Figure 2 shows a perspective view of the steam switch of the kettle and part of its associated linkage.

With reference to Figure 1, a cordless electric kettle 2 comprises a kettle body 4 arranged on a cordless power base 6. A combined connector and overheat protection control unit 8 (such as one of the applicant's U17 series of products) is arranged under the base 10 of the liquid heating chamber 12 of the kettle.

Arranged at the top of the handle 14 of the kettle is a steam sensitive switch 16. Such controls are well-known in the art, for example, the applicant's R48 switch.

Typically these switches comprise a bimetallic actuator sensitive to steam generated when water in the kettle boils, the actuator acting on an overcentre mechanism to open a set of contacts within the switch 16. The overcentre mechanism, is biased into an on position by a D spring 18 as shown in Figure 2.

As discussed so far, the appliance is conventional. In accordance with the invention, however, the steam switch 16 is linked with an actuator 20 which projects through the base 22 of the kettle body 2 to make contact with the upper surface 24 of the power base 6. The actuator 20 is formed as an integral part of an elongate linkage member 26 which, at its upper end, is provided with a finger 28 which cooperates with a lug 30 provided on the operating knob 32 of the switch 16 which is connected to the overcentre mechanism of the switch.

The link 26 is biased downwardly by a coil spring 34 mounted on a spigot 36 provided on a shoulder 38 on the link 26.

The link 26 extends adjacent the rear wall 38 of the liquid heating chamber 12 and extends through a void 40 provided between the back wall of the chamber 12 and the front wall 42 of a handle opening 44.

The rear wall 38 is provided with a projecting tooth 46 which engages in a slot 48 provided in the linkage. This limits the upward and downward movement of the linkage 46 thereby preventing excess movement or force being applied to the switch 16.

Operation of the appliance will now be described.

In the condition shown in Figure 1, the kettle is on and liquid is being heated by a heater (not shown). Power is supplied to the heater through the connector/control unit 8 and through the steam switch 16. In the normal course of events, water boiling in the chamber 12 will force steam into the steam switch 16 which will then open to turn the kettle off. The control knob 32 pivots in a clockwise direction in the sense of Figure 1 upon opening of the switch whereby the lug 30 on the knob 32 moves away from the finger 28 on the link 26. Thus, the link 26 does not interfere with the normal operation of the steam switch 16.

Should the kettle 4 be lifted from the power base 6 during the heating cycle, i.e. before the steam switch 16 has operated, the actuator 20 will be forced to downwardly under the force of the spring 34, moving the link finger lug 28 into contact with the knob lug 30 thereby also pivoting it in a clockwise direction in the sense of Figure 1. This moves the operating mechanism of the steam switch 16 over centre so as open the switch. Should the user then replace the kettle 4 on the power base 6, heating will not recommence as the steam switch 16 is open. Thus, should all the water have been poured out of the kettle 4, there is no danger of the kettle overheating. Only when the steam switch 16 has been closed manually can heating recommence.

## Claims

1. A liquid boiling appliance comprising: a steam sensitive switch mounted at an upper part of the appliance; an actuator cooperable with a surface or object on which the appliance is placed; and a linkage extending between the actuator and the steam sensitive switch such that, in use, when the appliance is lifted from the surface or object with the steam switch closed, the actuator moves out of cooperation with the surface or object, this movement of the actuator being transmitted by the linkage to the switch to open the switch.

2. An appliance as claimed in claim 1 wherein the switch is mounted at the top of a handle of the appliance.

3. An appliance as claimed in claim 1 or 2 wherein the appliance is a cordless appliance and the actuator is arranged to cooperate with a portion of a power base for the appliance.

4. An appliance as claimed in claim 1, 2 or 3 wherein the actuator projects from the appliance.

5. An appliance as claimed in any preceding claim wherein the actuator is spring biased.

6. An appliance as claimed in any preceding claim wherein the steam switch comprises an over centre switch mechanism, such that the linkage need only move the mechanism over centre to switch off the switch.

7. An appliance as claimed in any preceding claim wherein the linkage extends adjacent the rear wall of the water containing chamber of the appliance.

8. An appliance as claimed in any preceding claim wherein the linkage is provided with means which limits the movement of the linkage.
